(19) Europäisches Patentamt
European Patent Office
Office européen des brevets

(11) **EP 4 800 774 A1**

(12) **EUROPEAN PATENT APPLICATION**
published in accordance with Art. 153(4) EPC


(43) Date of publication:
**02.09.2026 Bulletin 2026/36**

(21) Application number: **23956735.7**

(22) Date of filing: **23.10.2023**

(51) International Patent Classification (IPC):
***H01M 4/587*** *(2010.01)* ***H01M 10/052*** *(2010.01)*
***H01M 10/0566*** *(2010.01)*

(52) Cooperative Patent Classification (CPC):
**H01M 4/587; H01M 10/052; H01M 10/0566;**
Y02E 60/10

(86) International application number:
**PCT/JP2023/038224**

(87) International publication number:
**WO 2025/088677 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**



(71) Applicant: **Resonac Corporation**
**Tokyo 105-7325 (JP)**

(72) Inventors:
- **HOSHI, Kento**
  **Tokyo 105-7325 (JP)**
- **CHEN, Wang**
  **Tokyo 105-7325 (JP)**
- **MATSUMOTO, Yoshiyuki**
  **Tokyo 105-7325 (JP)**

(74) Representative: **Hoffmann Eitle**
**Patent- und Rechtsanwälte PartmbB**
**Arabellastraße 30**
**81925 München (DE)**


(54) **GRAPHITE CARBON MATERIAL FOR LITHIUM-ION SECONDARY BATTERY ANODE, ANODE MATERIAL FOR LITHIUM-ION SECONDARY BATTERY, ANODE FOR LITHIUM-ION SECONDARY BATTERY, AND LITHIUM-ION SECONDARY BATTERY**


(57) There is provided a graphite carbon material for a lithium-ion secondary battery negative electrode, wherein the crystallite size Lc (002) determined by X-ray diffraction is 35 nm to 150 nm, and the compression load is 2.0 kN/cm$^2$ to 4.0 kN/cm$^2$.


EP 4 800 774 A1

## Description

[Technical Field]

The present disclosure relates to a graphite carbon material for a lithium-ion secondary battery negative electrode, a negative electrode material for a lithium-ion secondary battery, a negative electrode for a lithium-ion secondary battery, and a lithium-ion secondary battery.

[Background Art]

In recent years, with the rapid spread of, for example, information-related devices and communication devices such as personal computers, video cameras, and mobile phones, the development of batteries used as their power sources has become increasingly important. In addition, in the automobile industry and the like, the development of high-output and high-capacity batteries for electric vehicles and hybrid vehicles has been conducted. Among various batteries, lithium-ion secondary batteries are currently attracting attention due to their high energy density.

Lithium-ion secondary batteries to be mounted in electric vehicles and hybrid electric vehicles are required to have rapid charging properties and long-term reliability. That is, batteries which achieve both a high input and a long lifespan are desirable. In consideration of rapid charging properties, it has been proposed to reduce the particle size of the negative electrode active material to increase diffusibility of lithium ions in solids. In addition, in consideration of a long lifespan, a lithium-ion secondary battery negative electrode active material with a small specific surface area has been proposed.

Based on such considerations, for example, PTL 1 proposes a graphite carbon material for a lithium-ion secondary battery negative electrode which increases diffusibility of lithium ions in solids by reducing the particle size and reduces side reactions on the surface of the active material by making the specific surface area relatively small.

[Citation List]

[Patent Literature]

[PTL 1]Japanese Patent Application Publication No. 2018-6270

[Summary of Invention]

[Technical Problem]

In PTL 1 described above, initial charging and discharging efficiency is excellent, but further improvement in long-term reliability is required.

Here, an object of an aspect of the present disclosure is to provide a graphite carbon material for a lithium-ion secondary battery negative electrode, a negative electrode material for a lithium-ion secondary battery, a negative electrode for a lithium-ion secondary battery, and a lithium-ion secondary battery which can achieve excellent input characteristics, high-temperature storage characteristics, and cycle characteristics.

[Solution to Problem]

Specific means for achieving the above objects include the following aspects.

<1> A graphite carbon material for a lithium-ion secondary battery negative electrode, wherein the crystallite size Lc (002) determined by X-ray diffraction is 35 nm to 150 nm, and the compression load is 2.0 kN/cm$^2$ to 4.0 kN/cm$^2$.

<2> The graphite carbon material for a lithium-ion secondary battery negative electrode according to <1>, wherein, in a particle size distribution measured by a laser diffraction scattering method, when a volume cumulative distribution curve is drawn from the smallest particle side, the particle size (D50) at a cumulative 50% is 5 μm to 30 μm.

<3> The graphite carbon material for a lithium-ion secondary battery negative electrode according to <1> or <2>, wherein the intensity ratio (Id/Ig) of the maximum peak intensity Id around 1,330 cm$^{-1}$ to the maximum peak intensity Ig around 1,580 cm$^{-1}$ in laser Raman spectrophotometry measurement is 0.1 to 0.5.

<4> The graphite carbon material for a lithium-ion secondary battery negative electrode according to any one of <1> to <3>, wherein the specific surface area determined by nitrogen adsorption measurement at 77K is 0.7 m$^2$/g to 8 m$^2$/g.

<5> The graphite carbon material for a lithium-ion secondary battery negative electrode according to any one of <1> to <4>, wherein the crystallite size La (110) determined by X-ray diffraction is 50 nm to 450 nm.

<6> The graphite carbon material for a lithium-ion secondary battery negative electrode according to any one of <1> to <5>, wherein, in linseed oil absorption measurement, the oil absorption per 100 g of a graphite material is 30 mL to 75 mL.

<7> A negative electrode material for a lithium-ion secondary battery, including the graphite carbon material for a lithium-ion secondary battery according to any one of <1> to <6>.

<8> A negative electrode for a lithium-ion secondary battery, including a graphite carbon material layer containing the graphite carbon material for a lithium-ion secondary battery according to any one of <1> to <6>, and a current collector.

<9> A lithium-ion secondary battery, including the negative electrode for a lithium-ion secondary battery according to <8>, a positive electrode, and an electrolytic solution.

[Advantageous Effects of Invention]

An aspect of the present disclosure can provide a graphite carbon material for a lithium-ion secondary battery negative electrode, a negative electrode material for a lithium-ion secondary battery, a negative electrode for a lithium-ion secondary battery, and a lithium-ion secondary battery which can achieve excellent input characteristics, high-temperature storage characteristics, and cycle characteristics.

[Description of Embodiments]

Hereinafter, forms for implementing the present invention will be described in detail. However, the present invention is not limited to the following embodiments. In the following embodiments, constituent elements (also including elemental steps and the like) are not essential unless otherwise specified. The same applies to numerical values and ranges thereof, and they do not limit the present invention.

In the present disclosure, when a numerical range is indicated using "to" it means that numerical values stated before and after "to" are included as a minimum value and a maximum value.

In stepwise numerical ranges described in the present disclosure, an upper limit value or a lower limit value in one numerical range may be replaced with an upper limit value or a lower limit value of other described stepwise numerical ranges. In addition, in the numerical ranges described in the present disclosure, the upper limit value or the lower limit value of the numerical range may be replaced with values shown in tests.

In the present disclosure, in the graphite carbon material for a lithium-ion secondary battery negative electrode and in the composition, each component may contain a plurality of corresponding substances. Hereinafter, the "graphite carbon material for a lithium-ion secondary battery negative electrode" will be abbreviated as "graphite carbon material" in some cases. When there are a plurality of types of substances corresponding to each component in the graphite carbon material and in the composition, a content percentage or content of each component means a total content percentage or content of the plurality of types of substances present in the graphite carbon material and in the composition unless otherwise specified.

In the present disclosure, a plurality of types of particles corresponding to each component in the graphite carbon material and in the composition may be included. When there are a plurality of types of particles corresponding to each component in the graphite carbon material and in the composition, the particle size of each component means a value for a mixture including the plurality of types of particles present in the graphite carbon material and in the composition unless otherwise specified.

In the present disclosure, the term "layer" includes, when a region in which the layer is present is observed, not only a case in which the layer is formed over the entire region, but also a case in which the layer is formed over only a part of the region.

In the present disclosure, the term "lamination" means stacking of layers, where two or more layers may be bonded to each other or two or more layers may be detachable.

In the present disclosure, crystallite sizes Lc (002) and La (110) determined by X-ray diffraction are determined by the following method using an X-ray diffraction device (XRD).

A measurement sample is produced by mixing graphite powder and Si powder in a mass ratio of 5:1 in an agate mortar for 5 minutes, and the X-ray diffraction peak spectrum is measured for determination under the following measurement conditions. Here, diffraction peak positions are determined using standard silicon powder (for example, NIST Si 640f, commercially available from NIST) as an internal standard substance. As the X-ray diffraction device (XRD), for example, SmartLab 3kW (commercially available from Rigaku Corporation) can be used. Measurement conditions and calculation methods are based on JIS R 7651:2007 (methods for measuring lattice constants and crystallite sizes of carbon materials).

In the present disclosure, the compression load on a graphite carbon material is a magnitude of pressure required to compress the material to a density of 1.7 g/cm$^3$, and a larger compression load means that the graphite carbon material is less likely to undergo deformation, destruction, or the like under pressure.

Specifically, a mold is filled with a predetermined mass (for example, 3.0 g) of the graphite carbon material and compressed at a constant speed (for example, 10 mm/min), and the pressure ($kN/cm^2$) at which the density of the compressed graphite carbon material reaches 1.7 $g/cm^3$ is defined as the compression load on the graphite carbon material.

In the above measurement, for example, a mold with a diameter of 15 mm is used, and compression is performed using an autograph (for example, commercially available from Shimadzu Corporation). The density of the graphite carbon material is calculated from the volume of the graphite carbon material, which is determined based on the bottom area (for example, 1.767 $cm^2$) of the mold and the distance from the bottom surface of the mold to the pressing surface of the graphite carbon material, and from the mass of the graphite carbon material.

In the present disclosure, the particle size (D10), the particle size (D50), and the particle size (D90) are particle sizes below which 10%, 50%, and 90% of the total particle volume are present, respectively, when a volume cumulative distribution curve is drawn from the smallest particle side in the particle size distribution measured by a laser diffraction type particle size distribution measurement device.

Examples of laser diffraction type particle size distribution measurement devices include SALD-3000J (commercially available from Shimadzu Corporation).

In the present disclosure, the intensity ratio (Id/Ig, hereinafter referred to as an "R value") of the maximum peak intensity Id around 1,330 $cm^{-1}$ to the maximum peak intensity Ig around 1,580 $cm^{-1}$ in laser Raman spectrophotometry measurement is determined using a laser Raman spectrophotometer by the following method.

Argon laser light is emitted to a sample plate on which a measurement sample is set flat, and measurement is performed using a laser Raman spectrophotometer. As the laser Raman spectrophotometer, for example, NRS-1000 (commercially available from JASCO Corporation) can be used. The measurement conditions are as follows.

wavelength of argon laser light: 532 nm
wavenumber resolution: 2.56 $cm^{-1}$
measurement range: 1,180 $cm^{-1}$ to 1,730 $cm^{-1}$
peak research: background removal

The specific surface area determined by nitrogen adsorption measurement at 77K (hereinafter abbreviated as "specific surface area" in some cases) is determined from the adsorption isotherm obtained by nitrogen adsorption measurement at 77K using the BET method according to JIS Z 8830:2013. Nitrogen adsorption at liquid nitrogen temperature (77K) is measured using a high-speed specific surface area/pore distribution measurement device (for example, FlowSorbIII commercially available from Shimadzu Corporation) by a one-point method, and the specific surface area is calculated by applying the BET method.

When the BET specific surface area is measured, it is thought that water adsorbed on the sample surface and the structure affects the gas adsorption capacity, and thus it is preferable to first perform a pretreatment for removing water by heating.

In the pretreatment, a measurement cell containing 0.05 g of a measurement sample is depressurized to 10 Pa or less using a vacuum pump and then heated to 110°C, held for 3 hours or longer, and then naturally cooled to room temperature (25°C) while maintaining the reduced pressure. After this pretreatment is performed, and measurement is performed at an evaluation temperature of 77K and an evaluation pressure range set to a relative pressure (equilibrium pressure relative to the saturated vapor pressure) of less than 1.

In the present disclosure, in linseed oil absorption measurement, the oil absorption per 100 g of the graphite material (hereinafter referred to as "linseed oil absorption") is measured according to the method described in JIS K 6217-4:2008 "Carbon black for rubber-Fundamental characteristics-Part 4:Method of determining oil absorption number." However, measurement is performed using, as a reagent liquid, linseed oil (commercially available from Kanto Chemical Co., Inc.) in place of dibutyl phthalate (DBP).

A specific method for measuring the linseed oil absorption is as follows. The measurement sample is titrated with linseed oil using a constant speed burette, and the change in viscosity characteristics is measured using a torque detector. The amount of the reagent liquid added per 100 g of the measurement sample that corresponds to 70% of the maximum torque generated is defined as a linseed oil absorption (mL). Examples of measuring instruments include an absorption measurement device (commercially available from AsahiSouken Corporation).

In the present disclosure, the tap density is measured according to JIS R 1628:1997. The tap density can be measured using a packing density measurement device (for example, KRS-406, commercially available from Kuramochi Scientific Instruments Co., Ltd.). 100 mL of a graphite carbon material is put into a graduated cylinder, and tapping (dropping the graduated cylinder from a predetermined height) is performed until the density is saturated for calculation.

<Graphite Carbon Material for Lithium-ion Secondary Battery Negative Electrode>

In the graphite carbon material for a lithium-ion secondary battery negative electrode of the present disclosure, the crystallite size Lc (002) determined by X-ray diffraction is 35 nm to 150 nm, and the compression load is 2.0 kN/cm$^2$ to 4.0 kN/cm$^2$.

When the graphite carbon material for a lithium-ion secondary battery negative electrode has the above configuration, discharge specific capacity input characteristics and cycle characteristics become excellent. The reason for this is not clear, but it is speculated to be as follows.

It has been experimentally found that, when the compression load is set to be within a range of 2.0 kN/cm$^2$ to 4.0 kN/cm$^2$ and the crystallite size Lc (002) is set to be within a range of 35 nm to 150 nm, excellent input characteristics, high-temperature storage characteristics, and cycle characteristics are achieved. Furthermore, when the compression load is set to be within a range of 2.0 kN/cm$^2$ to 4.0 kN/cm$^2$, the carbon material returns to its original state (so-called springback percentage) to an excellent degree when a predetermined pressure is applied in the compressed state and the pressure is then released. Thereby, irreversible deformation such as destruction of the particle structure is less likely to occur, and it is thought that, even after charging and discharging are repeated, the contact area between the carbon material and the solid electrolyte is sufficiently maintained, and deterioration in cycle characteristics is further reduced.

The crystallite size Lc (002) is preferably 40 nm or more, more preferably 45 nm or more, and still more preferably 60 nm or more. The crystallite size Lc (002) is preferably 150 nm or less, more preferably 130 nm or less, and still more preferably 120 nm or less.

The compression load is 2.0 kN/cm$^2$ or more, preferably 2.1 kN/cm$^2$ or more, and more preferably 2.3 kN/cm$^2$ or more. In addition, the compression load is 4.0 kN/cm$^2$ or less, preferably 3.9 kN/cm$^2$ or less, and more preferably 3.8 kN/cm$^2$ or less.

In the particle size distribution measured by a laser diffraction scattering method, when a volume cumulative distribution curve is drawn from the smallest particle side, the ratio (D90/D10) of the particle size (D90) at a cumulative 90% to the particle size (D10) at a cumulative 10% is preferably 8.0 or less, more preferably 7.0 or less, and still more preferably 6.0 or less. The lower limit value of the ratio (D90/D10) is not particularly limited, and may be, for example, 1.5 or more or 2.0 or more.

The particle size (D50) is preferably 5 μm to 30 μm. When the particle size (D50) is 30 μm or less, the distance of lithium diffusing from the surface to the inside of the graphite carbon material is prevented from becoming long, and input characteristics of lithium-ion secondary batteries tend to be further improved. The particle size (D50) is preferably 25 μm or less, more preferably 20 μm or less, and still more preferably 17 μm or less.

When the particle size (D50) is 5 μm or more, the pressing pressure required to form an active material layer can be reduced, and as a result, input characteristics tend to become better. The particle size (D50) is preferably 5.5 μm or more, more preferably 6.0 μm or more, and still more preferably 6.2 μm or more.

The tap density is preferably 0.90 g/cm$^3$ or more, more preferably 0.91 g/cm$^3$ or more, and still more preferably 0.92 g/cm$^3$ or more. In addition, the tap density may be 1.30 g/cm$^3$ or less or 1.25 g/cm$^3$ or less.

The R value is preferably 0.10 to 0.50. When the R value is 0.10 or more, there are sufficient graphite lattice defects used for occluding and releasing lithium ions, and deterioration in input characteristics tends to be reduced. The R value is more preferably 0.15 or more and still more preferably 0.20 or more.

When the R value is 0.50 or less, the capacity tends to be excellent. The R value is preferably 0.40 or less, more preferably 0.35 or less, and still more preferably 0.30 or less.

The specific surface area is preferably 0.7 m$^2$/g to 8 m$^2$/g. When the specific surface area is within the above range, a favorable balance between input characteristics and lifespan characteristics tends to be obtained.

The specific surface area is more preferably 0.8 m$^2$/g or more, still more preferably 0.9 m$^2$/g or more, and particularly preferably 1.0 m$^2$/g or more. In addition, the specific surface area is more preferably 4.0 m$^2$/g or less, still more preferably 3.5 m$^2$/g or less, and particularly preferably 2.5 m$^2$/g or less.

The crystallite size La (110) is preferably 50 nm to 450 nm. When the crystallite size La (110) is 50 nm or more, the capacity tends to be excellent. In addition, when the crystallite size La (110) is 450 nm or less, the input tends to be excellent.

The crystallite size La (110) is more preferably 100 nm or more and still more preferably 150 nm or more. The La (110) is more preferably 440 nm or less and still more preferably 400 nm or less.

The linseed oil absorption is preferably 30 mL/100 g to 75 mL/100 g. When the linseed oil absorption is within the above range, it is easy to prepare a slurry for forming an active material layer and the workability tends to be excellent.

The linseed oil absorption is more preferably 70 mL/100 g or less and still more preferably 65 mL/100 g or less. The linseed oil absorption is more preferably 40 mL/100 g or more.

The average interplanar spacing $d_{002}$ determined by X-ray diffraction method is preferably 0.334 nm to 0.338 nm. When the average interplanar spacing $d_{002}$ is 0.338 nm or less, the initial charging and discharging efficiency and energy density of lithium-ion secondary batteries tend to be excellent.

In the present disclosure, the average interplanar spacing $d_{002}$ is calculated using the Bragg's equation based on the diffraction peak corresponding to the (002) plane of carbon, which appears at a diffraction angle $2\theta$ of around 24° to 27°, in a diffraction profile obtained by measuring diffraction lines with a goniometer when X-rays (CuKα radiation) are emitted to a sample.

Specifically, the measurement sample is filled into the recess of a quartz sample holder and set on the measurement stage, and measurement is performed using a wide-angle X-ray diffraction device (for example, commercially available from Rigaku Corporation) under the following measurement conditions.

radiation source: CuKα radiation average interplanar spacing (wavelength=0.15418 nm)
output: 40 kV, 20 mA
sampling interval: 0.010°
scanning range: 10° to 35°
scan speed: 0.5°/min

Examples of graphite carbon materials include graphites such as artificial graphite, natural graphite, graphitized mesophase carbon, and graphitized carbon fibers. The shape of the graphite is not particularly limited, and examples thereof include a flake shape, a spherical shape, an aggregated shape, and a fibrous shape. In order to obtain a high tap density, a spherical shape is preferable.

Artificial graphite can be obtained by firing a graphitizable aggregate. One type of the graphitizable aggregates may be used or two or more types thereof may be used in combination. In addition, graphite may be used together with the graphitizable aggregate. One type of the graphites may be used or two or more types thereof may be used in combination.

Examples of graphitizable aggregates that can be used include coke powder and resin carbides, but there are no particular limitations as long as they are powder materials that can be graphitized. Among these, coke powder that is easily graphitized is preferable, and examples thereof include mosaic coke and needle coke. Mosaic coke is more preferable in order to easily adjust the crystallite size Lc (002) to be within the range of 35 nm to 150 nm.

A binder (organic binding agent) may be used together with the graphitizable aggregate. One type of the binders may be used or two or more types thereof may be used in combination.

The binder (organic binding agent) is not particularly limited as long as it can be graphitized by firing, and examples of binders include organic materials such as tar, pitch, starch, thermosetting resins, and thermoplastic resins.

In addition to the graphitizable aggregate, other materials may be additionally used. Examples of other materials include a fluidity-imparting agent and a graphitization catalyst. One type of these other materials may be used or two or more types thereof may be used in combination.

The type of the fluidity-imparting agent is not particularly limited. Specific examples of fluidity-imparting agents include hydrocarbons such as liquid paraffin, paraffin wax, and polyethylene wax, fatty acids such as stearic acid, oleic acid, erucic acid, and 12-hydroxystearic acid, fatty acid metal salts such as zinc stearate, lead stearate, aluminum stearate, calcium stearate, and magnesium stearate, fatty acid amides such as stearamide, oleamide, erucamide, methylenebis(stearamide), and ethylene bis(stearamide), fatty acid esters such as stearic acid monoglyceride, stearyl stearate, and hydrogenated oil, and higher alcohols such as stearyl alcohol. Among these, fatty acids are preferable, and stearic acid is more preferable.

The type of the graphitization catalyst is not particularly limited. Specific examples of graphitization catalysts include substances having graphitization catalytic activity such as silicon, iron, nickel, titanium, and boron, and carbides, oxides, and nitrides of these substances.

The shape of the artificial graphite is not particularly limited, and it may be primary particles or aggregated particles. In the case of aggregated particles, it may or may not contain a carbon material derived from a binder. In addition, it may be graphite particles (hereinafter referred to as "aggregated graphite particles") in which a plurality of flat particles are aggregated or bonded together so that the orientation planes (main surfaces) are non-parallel to each other. In the case of aggregated graphite particles, the main surfaces of the plurality of flat particles being non-parallel to each other means that the surfaces (main surfaces) of the flat graphite particles with the largest cross-sectional areas are not aligned in a certain direction. For the aggregated graphite particles, Japanese Patent No. 3285520, Japanese Patent No. 3325021, and the like can be referred to.

The shape of the artificial graphite can be confirmed by observation under a scanning electron microscope (SEM).

Before firing for graphitization, a mixture containing a graphitizable aggregate, a binder, and other components such as graphite may be molded into a predetermined shape or may be fired in a powder form without being molded. It is preferable to perform firing after molding in order to easily adjust the compression load to be within the range of 2.0 $kN/cm^2$ to 4.0 $kN/cm^2$.

In addition, in order to achieve a tap density of 0.90 $g/cm^3$ or more and a particle size distribution ratio (D90/D10) of 8.0 or less, it is preferable to perform crushing before graphitization after molding, adjust the particle size using a sieve or

the like, and then perform graphitization.

The method for performing molding into a predetermined shape is not particularly limited. Examples thereof include a mold molding method in which a mixture is placed in a container such as a mold and pressed in a uniaxial direction, a vibration molding method in which a mixture is placed in a container such as a mold, a heavyweight is placed on the top, and the frame is subjected to vibration and impact for molding, and an extrusion molding method in which a mixture is extruded from a nozzle or the like using a horizontal press for molding. In order to improve production efficiency of molded products, extrusion molding is preferable.

The mixing ratio of the materials in the mixture is not particularly limited. For example, the content percentage of the binder with respect to 100 parts by mass of the graphitizable aggregates and graphites may be 0.5 parts by mass to 20 parts by mass, 1 part by mass to 18 parts by mass, or 1.2 parts by mass to 15 parts by mass. The binder may not be used. For example, when graphitizing after molding, the content percentage of the binder with respect to 100 parts by mass of the graphitizable aggregates and graphites may be 1.0 part by mass to 20 parts by mass, 1.5 parts by mass to 18 parts by mass, or 2.0 parts by mass to 15 parts by mass.

In addition, in order to keep the specific surface area of the obtained graphite carbon material small, the content percentage of the binder with respect to 100 parts by mass of the graphitizable aggregates and graphites may be 1.0 part by mass to 14 parts by mass, 1.2 parts by mass to 12 parts by mass, or 1.5 parts by mass to 10 parts by mass.

In order to facilitate molding, the mixture preferably contains a fluidity-imparting agent. Particularly, when the mixture is molded by extrusion molding, it is preferable to contain a fluidity-imparting agent in order to perform molding while the mixture is flowing.

When the mixture contains a fluidity-imparting agent, the amount thereof is not particularly limited. For example, the content percentage of the fluidity-imparting agent with respect to the entire mixture may be 0.1 mass% to 20 mass%, 0.5 mass% to 10 mass%, or 0.5 mass% to 5 mass%. The mixture may not contain a fluidity-imparting agent.

When the mixture contains a graphitization catalyst, the amount thereof is not particularly limited. For example, the content percentage of the graphitization catalyst with respect to the entire mixture may be 0.1 mass% to 50 mass%, 0.5 mass% to 40 mass%, or 0.5 mass% to 30 mass%. The mixture may not contain a graphitization catalyst.

Firing is preferably performed under conditions in which the mixture is unlikely to oxidize, and for example, a method for performing firing in a nitrogen atmosphere, an argon gas atmosphere, or a vacuum may be used. The graphitization temperature is preferably 2,000°C or higher, more preferably 2,500°C or higher, and still more preferably 2,800°C to 3,200°C.

When the graphitization temperature is 2,000°C or higher, graphite crystals grow well and the discharging capacity tends to be improved. When the graphitization temperature is 3,200°C or lower, the crystallite size Lc (002) tends to be easily adjusted to be within the range of 35 nm to 150 nm.

The obtained graphite carbon material is preferably crushed to have a desired volume average particle size. The graphitized product crushing method is not particularly limited, and known methods using a jet mill, a vibration mill, a pin mill, and a hammer mill can be applied.

At least a part of the surface of the obtained graphite carbon material may be coated with amorphous carbon. The amorphous carbon is preferably at least one selected from the group consisting of carbonaceous substances and carbonaceous particles obtained from an organic compound (hereinafter referred to as a precursor for amorphous carbon) that can be converted into a carbonaceous component by a heat treatment.

The precursor for amorphous carbon is not particularly limited, and examples thereof include pitch and organic polymer compounds. Examples of pitches include ethylene heavy-end pitch, crude oil pitch, coal tar pitch, asphalt decomposition pitch, pitch produced by the thermal decomposition of polyvinyl chloride or the like, and pitch produced by polymerizing naphthalene or the like in the presence of a superacid. Examples of organic polymer compounds include thermoplastic resins such as polyvinyl chloride, polyvinyl alcohol, polyvinyl acetate, and polyvinyl butyral, and natural substances such as starch and cellulose.

The carbonaceous particles used as amorphous carbon are not particularly limited, and examples thereof include particles of acetylene black, oil furnace black, Ketjen black, channel black, thermal black, and amorphous graphite.

Examples of methods of coating with amorphous carbon include a method for heating a mixture containing a graphite carbon material and a precursor for amorphous carbon. In order to improve input characteristics of lithium-ion secondary batteries, the temperature at which the mixture is heated is preferably 800°C to 1,500°C, more preferably 900°C to 1,300°C, and still more preferably 1,050°C to 1,250°C. The temperature at which the mixture is heated may be constant from the start to the end of the heat treatment or may be changed.

<Negative Electrode Material for Lithium-ion Secondary Battery>

A negative electrode material for a lithium-ion secondary battery of the present disclosure (hereinafter abbreviated as a "negative electrode material" in some cases) contains a graphite carbon material for a lithium-ion secondary battery of the present disclosure. The graphite carbon material of the present disclosure can be suitably used as a negative

electrode active material for a lithium-ion secondary battery.

As the negative electrode active material, the graphite carbon material of the present disclosure may be used alone or other negative electrode active materials may be used in combination. The other negative electrode active materials are not particularly limited, and examples thereof include artificial graphite, amorphous carbon, carbon black, fibrous carbon, and nanocarbon that do not correspond to the graphite carbon material of the present disclosure. One type of the other carbon materials may be used or two or more types thereof may be used in combination.

In addition, the negative electrode active material may contain particles containing elements that can occlude and release lithium ions, other than carbon materials. Elements that can occlude and release lithium ions are not particularly limited, and examples thereof include Si, Sn, Ge, and In.

The content percentage of the graphite carbon material of the present disclosure in the negative electrode active material is not particularly limited, and is, for example, preferably 50 mass% or more, more preferably 80 mass% or more, still more preferably 90 mass% or more, and particularly preferably 100 mass%.

<Negative Electrode for Lithium-ion Secondary Battery>

A negative electrode for a lithium-ion secondary battery of the present disclosure includes a graphite carbon material layer containing a graphite carbon material for a lithium-ion secondary battery of the present disclosure and a current collector. The negative electrode for a lithium-ion secondary battery may include, in addition to the graphite carbon material layer containing a graphite carbon material of the present disclosure and the current collector, other constituent elements as necessary.

The negative electrode for a lithium-ion secondary battery can be produced, for example, by kneading a graphite carbon material and a binding agent together with a solvent to produce a slurry-like graphite carbon material composition, applying it onto a current collector to form a graphite carbon material layer, molding the graphite carbon material composition into a shape such as a sheet shape or a pellet shape, and integrating it with the current collector. Kneading can be performed using a dispersing device such as a stirrer, a ball mill, a super sand mill, or a pressure kneader.

The binding agent used for preparing the graphite carbon material composition is not particularly limited. Examples of binding agents include styrene-butadiene copolymers, polymers of ethylenically unsaturated carboxylic acid esters such as methyl acrylate, methyl methacrylate, ethyl acrylate, ethyl methacrylate, butyl acrylate, butyl methacrylate, acrylonitrile, methacrylonitrile, hydroxyethyl acrylate, and hydroxyethyl methacrylate, polymers of ethylenically unsaturated carboxylic acids such as acrylic acid, methacrylic acid, itaconic acid, fumaric acid, and maleic acid, and polymer compounds with high ion conductivity such as polyvinylidene fluoride, polyethylene oxide, polyepichlorohydrin, polyphosphazene, and polyacrylonitrile. When the graphite carbon material composition contains a binding agent, the amount thereof is not particularly limited. For example, the content of the binding agent with respect to a total amount of 100 parts by mass of the graphite carbon material and the binding agent may be 0.5 parts by mass to 20 parts by mass.

The solvent is not particularly limited as long as it can dissolve or dispersion the binding agent. Specific examples thereof include organic solvents such as N-methyl-2-pyrrolidone, N,N-dimethylacetamide, N,N-dimethylformamide, and $\gamma$-butyrolactone, and water. The amount of the solvent used is not particularly limited as long as the graphite carbon material composition can be brought into a desired state, such as a paste. For example, the amount of the solvent used with respect to 100 parts by mass of the graphite carbon material is preferably 60 parts by mass or more and less than 150 parts by mass.

The graphite carbon material composition may contain a thickener. Examples of thickeners include carboxymethyl cellulose or salts thereof, methyl cellulose, hydroxymethyl cellulose, hydroxyethyl cellulose, ethyl cellulose, polyvinyl alcohol, polyacrylic acid or salts thereof, alginic acid or salts thereof, oxidized starch, phosphorylated starch, and casein. When the graphite carbon material composition contains a thickener, the amount thereof is not particularly limited. For example, the content of the thickener with respect to 100 parts by mass of the graphite carbon material may be 0.1 parts by mass to 5 parts by mass.

The graphite carbon material composition may contain a conductive additive. Examples of conductive additives include carbon materials such as artificial graphite and carbon black (acetylene black, thermal black, furnace black, etc.), conductive oxides, and conductive nitrides. When the graphite carbon material composition contains a conductive additive, the amount thereof is not particularly limited. For example, the content of the conductive additive with respect to 100 parts by mass of the graphite carbon material may be 0.5 parts by mass to 15 parts by mass.

The material of the current collector is not particularly limited, and can be selected from among aluminum, copper, nickel, titanium, stainless steel, and the like. The form of the current collector is not particularly limited, and can be selected from among a foil, a perforated foil, a mesh, and the like. In addition, a porous material such as a porous metal (foamed metal) or carbon paper can also be used as the current collector.

When the graphite carbon material composition is applied onto the current collector to form a graphite carbon material layer, the method is not particularly limited, and known methods such as a metal mask printing method, an electrostatic coating method, a dip coating method, a spray coating method, a roll coating method, a doctor blade method,

a comma coating method, a gravure coating method, and a screen printing method can be used. After the graphite carbon material composition is applied onto the current collector, the solvent contained in the graphite carbon material composition is removed by drying. Drying can be performed using, for example, a hot air dryer, an infrared dryer, or a combination of these devices. As necessary, a rolling treatment may be performed. The rolling treatment can be performed by a method using a flat press, a calender roll or the like.

When the graphite carbon material composition, which is molded into a sheet shape, a pellet shape, or the like, is integrated with the current collector to form a graphite carbon material layer, the integration method is not particularly limited. For example, the integration can be performed using a roller, a flat press, or a combination of these devices. The pressure during integration is preferably, for example, 1 MPa to 200 MPa.

<Lithium-ion Secondary Battery>

A lithium-ion secondary battery of the present disclosure includes the negative electrode for a lithium-ion secondary battery of the present disclosure (hereinafter simply referred to as a "negative electrode"), a positive electrode, and an electrolytic solution.

Similarly to the above method for producing the negative electrode, the positive electrode can be obtained by forming a positive electrode material layer on a current collector. As the current collector, a foil, perforated foil, or mesh, or the like, made of a metal or an alloy, such as aluminum, titanium, or stainless steel can be used.

The positive electrode material used to form the positive electrode material layer is not particularly limited. Examples thereof include metal compounds (metal oxide, metal sulfide, etc.) that can dope or intercalate lithium ions and conductive polymer materials. More specific examples thereof include lithium-containing compounds such as lithium cobalt oxide ($LiCoO_2$), lithium nickel oxide ($LiNiO_2$), lithium manganese oxide ($LiMnO_2$), complex oxides thereof ($LiCo_xNi_yMn_zO_2$, x+y+z=1), complex oxides containing additive element M' ($LiCo_aNi_bMn_cM'_dO_2$, a+b+c+d=1, M': Al, Mg, Ti, Zr, or Ge), spinel type lithium manganese oxide ($LiMn_2O_4$), lithium vanadium compounds, $V_2O_5$, $V_6O_{13}$, $VO_2$, $MnO_2$, $TiO_2$, $MoV_2O_8$, $TiS_2$, $V_2S_5$, $VS_2$, $MoS_2$, $MoS_3$, $Cr_3O_8$, $Cr_2O_5$, and olivine type $LiMPO_4$ (M: Co, Ni, Mn, Fe), conductive polymers such as polyacetylene, polyaniline, polypyrrole, polythiophene, and polyacene, and porous carbon. One type of the positive electrode materials may be used or two or more types thereof may be used.

The electrolytic solution is not particularly limited, and for example, a solution in which a lithium salt as an electrolyte is dissolved in a non-aqueous solvent (so-called organic electrolytic solution) can be used.

Examples of lithium salts include $LiClO_4$, $LiPF_6$, $LiAsF_6$, $LiBF_4$, and $LiSO_3CF_3$. One type of the lithium salts may be used or two or more types thereof may be used.

Examples of non-aqueous solvents include ethylene carbonate, fluoroethylene carbonate, chloroethylene carbonate, propylene carbonate, butylene carbonate, vinylene carbonate, cyclopentanone, cyclohexylbenzene, sulfolane, propane sultone, 3-methylsulfolane, 2,4-dimethylsulfolane, 3-methyl-1,3-oxazolidin-2-one, $\gamma$-butyrolactone, dimethyl carbonate, diethyl carbonate, ethyl methyl carbonate, methyl propyl carbonate, butyl methyl carbonate, ethyl propyl carbonate, butyl ethyl carbonate, dipropyl carbonate, 1,2-dimethoxyethane, tetrahydrofuran, 2-methyltetrahydrofuran, 1,3-dioxolane, methyl acetate, ethyl acetate, trimethyl phosphate, and triethyl phosphate. One of the non-aqueous solvents may be used or two or more types thereof may be used.

The form of the positive electrode and the negative electrode in the lithium-ion secondary battery is not particularly limited. For example, the positive electrode and the negative electrode, and as necessary, a separator disposed between the positive electrode and the negative electrode, may be wound in a spiral shape or these are laminated in a flat shape.

The separator is not particularly limited, and for example, a resin nonwoven fabric, a cloth, a microporous film, or a combination thereof can be used. Examples of resins include those mainly composed of polyolefins such as polyethylene and polypropylene. When the positive electrode and the negative electrode are not in direct contact with each other due to the structure of the lithium-ion secondary battery, the separator may not be used.

The shape of the lithium-ion secondary battery is not particularly limited. Examples thereof include laminate-type batteries, paper-type batteries, button-type batteries, coin-type batteries, laminate-type batteries, cylindrical-type batteries, and prismatic-type batteries.

The lithium-ion secondary battery of the present disclosure is suitable as a large-capacity lithium-ion secondary battery for use in electric vehicles, power tools, power storage devices, and the like due to its excellent output characteristics. It is particularly suitable as a lithium-ion secondary battery for use in electric vehicles (EVs), hybrid electric vehicles (HEVs), plug-in hybrid electric vehicles (PHEVs), and the like, where charging and discharging at high currents are required to improve acceleration performance and regenerative braking performance.

[Examples]

The present disclosure will be described below in more detail with reference to Examples, but the present

disclosure is not limited to these Examples.

The particle size (D50) was measured by the following method.

A solution prepared by dispersing a graphite carbon material sample in purified water with 0.2 mass% of a surfactant (product name: Liponol T/15, commercially available from Lion Corporation) was placed in a sample water tank of a laser diffraction type particle size distribution measurement device (SALD-3000J, commercially available from Shimadzu Corporation). Next, the solution was circulated with a pump (the pump flow rate was 65% of the maximum value) while applying ultrasonic waves, the amount of water was adjusted so that the absorbance was 0.10 to 0.15, and the volume-based particle size distribution was measured. The particle size at which the volume cumulative distribution (%) reached 50% from the smallest particle size was determined as the particle size D50 (um) (average particle size).

The crystallite size Lc (002), the crystallite size La (110), the compression load, the R value, the specific surface area, the linseed oil absorption, and the tap density were measured by the above methods.

[Production of Graphite Carbon Material]

As a raw material for the graphite carbon material, petroleum-derived raw coke (needle coke, coke A) was used. The raw coke was crushed with a hammer mill. The crushed material was sieved using a sieve with a 3 mm mesh opening, the undersize material was additionally sieved using a sieve with a 1 mm mesh opening, and granules with a particle size of 1 mm to 3 mm were collected.

The obtained coke particles were crushed and classified using a roller mill to obtain flat coke particles with a D50 of 10.1 μm. The standard deviation (σ) of the particle size distribution of the coke particles was 0.22.

65 parts by mass of the obtained coke particles (fixed carbon 90 mass%), 7 parts by mass of starch (fixed carbon 20 mass%), and 28 parts by mass of water were kneaded using a kneader to obtain a mixture. In Table 1, the amount of the binder was calculated by the proportion (%) of the fixed carbon content of the binder with respect to a total fixed carbon content of the aggregate and binder.

Next, the obtained mixture was molded at room temperature (25°C) by uniaxial pressing to a density of 1.3 g/cm$^3$ or less to obtain a molded product. Next, the obtained molded product was heated in a nitrogen atmosphere at 850°C for 8 hours. Then, the product was graphitized at 3,000°C for 30 hours. The obtained particles were sieved through a 280-mesh screen to obtain a graphite carbon material A as the negative electrode material.

The values of the physical properties of the produced graphite carbon material A were measured. The values of the physical properties are shown in Table 1.

(Production of Negative Electrode)

An aqueous solution (CMC concentration: 1.5 mass%) containing CMC (carboxymethyl cellulose, product number 2200, commercially available from Daicel FineChem Ltd.) as a thickener was added to 97 parts by mass of the graphite carbon material A so that the solid content of CMC was 1.5 parts by mass, and the mixture was kneaded for 10 minutes. Next, purified water was added so that the total solid content concentration of the negative electrode material and CMC was 40 mass% to 50 mass%, and the mixture was kneaded for 10 minutes. Subsequently, an aqueous dispersion solution (SBR concentration: 40 mass%) containing styrene butadiene copolymer rubber SBR (BM400-B, commercially available from Zeon Corporation) as a binding agent was added so that the solid content of SBR was 1.5 parts by mass, and the mixture was mixed for 10 minutes to produce a paste-like negative electrode material composition. Next, the negative electrode material composition was applied to an electrolytic copper foil with a thickness of 11 μm using a comma coater with the clearance adjusted so that a coating amount per unit area was 10.0 mg/cm$^2$ to form a negative electrode material layer. Then, the electrode density was adjusted to 1.6 g/cm$^3$ using a roll press.

(Production of Coin-type Cell)

The electrolytic copper foil with the negative electrode material layer formed thereon was punched into a disk shape with a diameter of 14 mm to produce a sample electrode (negative electrode) for a coin-type cell. The produced sample electrode (negative electrode), a separator, and a counter electrode (metallic lithium) were put into a coin-type battery container in this order and an electrolytic solution was injected to produce a coin-type lithium-ion secondary battery. As the electrolytic solution, a solution in which 0.5 mass% of vinylene carbonate (VC) with respect to a total amount of the mixed solution was added to a mixed solvent containing ethylene carbonate (EC) and ethyl methyl carbonate (EMC) (a volume ratio of EC and EMC: 3:7), and $LiPF_6$ was dissolved at a concentration of 1 mol/L was used. As the separator, a polyethylene microporous membrane with a thickness of 20 μm was used. Using the produced lithium-ion secondary battery, the discharge specific capacity was evaluated by the following method.

Here, the coin-type battery was produced in a glove box in an Ar atmosphere with a dew point temperature of -70°C and an oxygen concentration of less than 10 ppm.

(Measurement of Discharge Specific Capacity)

The produced coin-type cell was left in a thermostatic chamber at 25°C for 3 hours, then subjected to constant current charging (CC charging) up to 0 V ($Li/Li^+$) at a current value equivalent to 0.2C, and then subjected to constant voltage charging (CV charging) until the current reached a value equivalent to 0.02C. After a 15-minute rest, the cell was subjected to CC discharging up to 1.5 V at a current value equivalent to 0.2C. The value obtained by dividing the electricity quantity at that time by the mass of the active material (mass of only the graphite material) of the electrode was calculated as the discharge specific capacity.

Discharge specific capacity (mAh/g)=discharge electricity quantity (mAh)÷active material mass (g)

(Production of Laminate-type Cell)

The negative electrode produced above was punched out to have a coated area with a size of 4 cm×5 cm and a tab (uncoated part) with a size of 1 cm×1.5 cm, and the positive electrode was punched out to have a size of 3.99 cm×4.99 cm. For the tab part, a nickel lead tab with a sealant was ultrasonically welded to the negative electrode, and an aluminum lead tab with a sealant was ultrasonically welded to the positive electrode. The negative electrode was wound once with a separator, and the current collector side was thermally welded.

A 12 cm wide×10 cm long aluminum laminate sheet was folded in half horizontally, the separator-wrapped negative electrode was disposed at a part where the sealant part and the edge of the aluminum laminate seal overlapped, and the lower part of the sealant and the aluminum laminate seal part were fixed with a polyimide tape. Next, the positive electrode was disposed so that it overlapped the coated area of the negative electrode, and fixing with a polyimide tape was performed in the same manner. The part (upper part) where the aluminum laminate sheet and the sealant part overlapped, and the sides were each welded using a heat welding machine. After vacuum drying at 60°C for 12 hours in a vacuum dryer, the electrolytic solution was injected from the lower part, and the lower part was then thermally welded under vacuum using a vacuum heat welding machine. As the electrolytic solution, a solution in which 0.5 mass% of vinylene carbonate (VC) with respect to a total amount of the mixed solution was added to a mixed solvent containing ethylene carbonate (EC) and ethyl methyl carbonate (EMC) (a volume ratio of EC and EMC: 3:7), and $LiPF_6$ was dissolved at a concentration of 1 mol/L was used. As the separator, a polyethylene microporous membrane with a thickness of 20 μm was used.

Here, the laminate-type battery was produced in a dry room with a dew point temperature of -50°C.

(Aging Treatment)

The produced laminate-type cell was left in a thermostatic chamber at 25°C for 12 hours, then subjected to constant current charging (CC charging) up to 4.2 V at a current value equivalent to 0.2CA, and then subjected to constant voltage charging (CV charging) until the current reached a value equivalent to 0.02CA. Next, the cell was subjected to CC discharging up to 2.7 V at a current value equivalent to 0.2CA. This process was defined as one cycle, and after three cycles were repeated, again, the cell was subjected to CC-CV charging (CC: equivalent to 0.2CA, CV: equivalent to 0.02CA) up to 4.2 V, and left in a thermostatic chamber set at 60°C for 12 hours. Then, the cell was discharged up to 2.7 V at a current value equivalent to 0.2CA and subjected to an aging treatment. A 15-minute rest period was set between charging and discharging.

(Input Characteristics)

For input characteristics, the aged battery was left in a thermostatic chamber set at 25°C for 1 hour, the state of charge (SOC) was adjusted to 50%, the battery was then charged for 10 seconds at current values equivalent to 0.2C, 1C, 3C, and 5C, and the slope of the difference in voltage change at that time with respect to each current value was calculated as the direct current internal resistance (DC-IR). A 15-minute rest period was set between measurements at each current value. A smaller value of the direct current internal resistance can be determined to indicate better input characteristics.

Here, the SOC could be adjusted by separately calculating the open circuit voltage for each SOC, and performing CC-CV charging (CC: equivalent to 0.2A, CV: equivalent to 0.02C) up to that the voltage.

(Cycle Characteristics)

The aged battery was left in a thermostatic chamber set at 25°C for 1 hour, then subjected to constant current charging (CC charging) up to 4.2 V at a current value equivalent to 0.2C, and then subjected to constant voltage charging (CV charging) until the current reached a value equivalent to 0.02C. Next, the battery was subjected to CC discharging up to 2.7 V at a current value equivalent to 0.2C. The discharging capacity at this time was defined as the initial discharging

capacity. Then, the current value was changed to a value equivalent to 1C, the battery was subjected to constant current charging up to 4.2 V, and then subjected to constant voltage charging until the current reached a value equivalent to 0.02C. Next, the battery was discharged up to 2.7 V at a current value equivalent to 1C. After this cycle was repeated 100 times, the battery was subjected to constant current charging (CC charging) up to 4.2 V at a current value equivalent to 0.2C, and then subjected to constant voltage charging (CV charging) until the current reached a value equivalent to 0.02C. Next, the battery was subjected to CC discharging up to 2.7 V at a current value equivalent to 0.2C. The discharging capacity at this time was defined as the post-cycle discharging capacity.

Cycle characteristics were calculated by the following formula.

Cycle characteristics (%)= post-cycle discharging capacity (mAh)/initial discharging capacity (mAh)×100

(Expansion Rate)

The expansion rate for the laminate-type cell was calculated by measuring the thickness after initial discharging and the thickness after 100 discharging cycles according to the following formula.

Expansion rate (%)=thickness after 100 discharging cycles (mm)/thickness after initial discharging (mm)×100

(High-temperature Storage Characteristics)

The aged battery was left in a thermostatic chamber set at 25°C for 1 hour, then subjected to constant current charging (CC charging) up to 4.2 V at a current value equivalent to 0.2C, and then subjected to constant voltage charging (CV charging) until the current reached a value equivalent to 0.02C. Next, the battery was subjected to CC discharging up to 2.7 V at a current value equivalent to 0.2C. The discharging capacity at this time was defined as the initial discharging capacity.

Then, the temperature of the thermostatic chamber was changed to 60°C and the battery was left in the thermostatic chamber for 10 days. After 10 days, the thermostatic chamber was set to 25°C, and the battery was left for 3 hours, and then discharged up to 2.7 V at a current value equivalent to 0.2C. Next, the battery was subjected to constant current charging (CC charging) up to 4.2 V at a current value equivalent to 0.2C and then subjected to constant voltage charging (CV charging) until the current reached a value equivalent to 0.02C. Next, the battery was subjected to CC discharging up to 2.7 V at a current value equivalent to 0.2C. The capacity at this time was defined as the post-storage discharging capacity.

The high-temperature storage characteristics were calculated by the following formula.

High-temperature storage characteristics (%)=post-storage discharging capacity (mAh)/initial discharging capacity (mAh)×100

[Examples 2 to 6]

Graphite carbon materials B to F were obtained in the same manner as for the graphite carbon material A in Example 1 except that coke B (mosaic coke), coke C (mosaic coke), coke D (semi-needle coke), coke E (super needle coke), or coke F (mosaic coke) was used in place of coke A. Using the graphite carbon materials B to F, batteries were produced in the same method as in Example 1, and the batteries were evaluated.

[Example 7]

A graphite carbon material A2 was obtained in the same manner as in Example 1 except that the particle size (D50) of the graphite carbon material A was 9 μm. Using the graphite carbon material A2, a battery was produced in the same method as in Example 1, and the battery was evaluated.

[Example 8]

A graphite carbon material A3 was obtained in the same manner as in Example 1 except that the particle size (D50) of the graphite carbon material A was 30 μm. Using the graphite carbon material A3, a battery was produced in the same method as in Example 1, and the battery was evaluated.

[Example 9]

After the graphite material A was obtained in Example 1, 5 parts by mass of coal tar pitch was mixed with 100 parts by mass of the graphite material A, and the mixture was heated to 1,000°C at a heating rate of 200°C/h and then held for 1 hour and fired. Firing was performed in a nitrogen atmosphere. After cooling to room temperature (25°C), the fired sample was crushed to a size of 15 μm using a cutter mill, and then sieved using a sieve with a 0.109 mm mesh opening to obtain a graphite carbon material AC. Using the graphite carbon material AC, a battery was produced in the same method as in Example 1, and the battery was evaluated.

[Comparative Example 1]

Needle coke (coke A) was crushed and additionally finely crushed using a jet mill to achieve a particle size (D50) of 16 μm. This sample was heated in a nitrogen atmosphere at a maximum temperature of 1,000°C for 1 hour and then fired at 3,000°C for 1 hour, and the graphitizable component was graphitized. The obtained graphite carbon material was crushed using a cutter mill and then classified to obtain a graphite carbon material A4. The particle size (D50) of the graphite carbon material A4 was 15 μm.

After the graphite material A4 was obtained, 20 parts by mass of coal tar pitch was mixed with 100 parts by mass of the graphite material A4, and the mixture was heated to 1,000°C at a heating rate of 200°C/h and then held for 1 hour and fired. Firing was performed in a nitrogen atmosphere. After cooling to room temperature (25°C), the fired sample was crushed to a size of 15 μm using a cutter mill, and then sieved using a sieve with a 0.109 mm mesh opening to obtain a graphite carbon material A4C. Using the graphite carbon material A4C, a battery was produced in the same method as in Example 1, and the battery was evaluated.

[Comparative Example 2]

Super needle coke (coke G) was crushed and additionally finely crushed using a jet mill to achieve a particle size (D50) of 16 μm. This sample was heated in a nitrogen atmosphere at a maximum temperature of 1,000°C for 1 hour and then fired at 3,000°C for 1 hour, and the graphitizable component was graphitized. The obtained graphite carbon material was crushed using a cutter mill and then classified to obtain a graphite carbon material G. The particle size (D50) of the graphite carbon material G was 15 μm.

[Comparative Example 3]

A graphite carbon material H was obtained in the same manner as in Comparative Example 2 except that the type of coke was changed to coke H (mosaic coke). Using the graphite carbon material H, a battery was produced in the same method as in Example 1, and the battery was evaluated.

[Comparative Example 4]

A graphite carbon material B2 was obtained in the same method as in Comparative Example 2 except that, unlike Comparative Example 2, coke B (mosaic coke) was used and finely crushed to achieve a particle size (D50) of 5.5 μm, the sample was heated at a maximum temperature of 1,300°C and then fired at 2,800°C, and no classification was performed after firing. Using the graphite carbon material B2, a battery was produced in the same method as in Example 1, and the battery was evaluated.

[Table 1]

| | Graphite carbon material | Crystallite size Lc (002) | Compression load | Raman (R value) | Crystallite size La (110) | Average particle size (D50) | Specific surface area | Oil absorption |
|---|---|---|---|---|---|---|---|---|
| | | [nm] | [kN/cm$^2$] | | [nm] | [μm] | [m$^2$/g] | [mL/100g] |
| Example1 | A | 101 | 2.3 | 0.20 | 360 | 15 | 1.7 | 62 |
| Example2 | B | 74 | 2.8 | 0.20 | 355 | 15 | 1.8 | 62 |
| Example3 | C | 50 | 3.8 | 0.20 | 223 | 15 | 1.7 | 60 |
| Example4 | D | 120 | 2.1 | 0.20 | 330 | 15 | 1.7 | 59 |

(continued)

| | Graphite carbon material | Crystallite size Lc (002) | Compression load | Raman (R value) | Crystallite size La (110) | Average particle size (D50) | Specific surface area | Oil absorption |
|---|---|---|---|---|---|---|---|---|
| | | [nm] | [kN/cm$^2$] | | [nm] | [$\mu$m] | [m$^2$/g] | [mL/100g] |
| Example5 | E | 150 | 2.0 | 0.20 | 450 | 15 | 1.7 | 60 |
| Example6 | F | 40 | 4.0 | 0.20 | 220 | 15 | 1.8 | 60 |
| Example7 | A2 | 101 | 2.8 | 0.20 | 360 | 9 | 2.7 | 62 |
| Example8 | A3 | 101 | 2.0 | 0.20 | 360 | 30 | 1.4 | 59 |
| Example9 | AC | 101 | 2.8 | 0.20 | 360 | 15 | 1.2 | 61 |
| Comparative Example1 | A4C | 101 | 1.9 | 0.20 | 360 | 15 | 1.7 | 62 |
| Comparative Example2 | G | 170 | 2.0 | 0.20 | 490 | 15 | 1.7 | 60 |
| Comparative Example3 | H | 30 | 4.0 | 20 | 210 | 15 | 1.7 | 61 |
| Comparative Example4 | B2 | 72.4 | 4.1 | 0.20 | 330 | 4 | 3.4 | 77 |

[Table 2]

| | Discharge specific capacity | Input characteristics | Cycle characteristics | Expansion rate | High-temperature storage characteristics |
|---|---|---|---|---|---|
| | [mAh/g] | [Ω] | [%] | [%] | [%] |
| Example1 | 344 | 1.67 | 96 | 6.1 | 97 |
| Example2 | 341 | 1.60 | 97 | 4.8 | 97 |
| Example3 | 335 | 1.55 | 97 | 4.5 | 97 |
| Example4 | 347 | 1.73 | 95 | 6.3 | 97 |
| Example5 | 348 | 1.78 | 94 | 6.4 | 96 |
| Example6 | 325 | 1.53 | 97 | 4.3 | 95 |
| Example7 | 342 | 1.62 | 95 | 6.0 | 95 |
| Example8 | 345 | 1.67 | 97 | 6.3 | 97 |
| Example9 | 344 | 1.56 | 96 | 6.1 | 95 |
| Comparative Example1 | 344 | 1.84 | 95 | 6.2 | 96 |
| Comparative Example2 | 349 | 2.04 | 92 | 7.1 | 96 |
| Comparative Example3 | 310 | 1.68 | 96 | 4.3 | 92 |
| Comparative Example4 | 340 | 1.55 | 95 | 5.3 | 90 |

As shown in the results in Table 2, the lithium-ion secondary batteries produced using the negative electrode materials of Examples had better input characteristics, high-temperature storage characteristics, and cycle characteristics than the lithium-ion secondary batteries produced using the negative electrode materials of Comparative Examples. It can be understood that the other characteristics were equivalent to or better than those of Comparative Examples.

## Claims

1. A graphite carbon material for a lithium-ion secondary battery negative electrode, wherein the crystallite size Lc (002) determined by X-ray diffraction is 35 nm to 150 nm, and the compression load is 2.0 $kN/cm^2$ to 4.0 $kN/cm^2$.

2. The graphite carbon material for a lithium-ion secondary battery negative electrode according to claim 1, wherein, in a particle size distribution measured by a laser diffraction scattering method, when a volume cumulative distribution curve is drawn from the smallest particle side, the particle size (D50) at a cumulative 50% is 5 μm to 30 μm.

3. The graphite carbon material for a lithium-ion secondary battery negative electrode according to claim 1 or 2, wherein the intensity ratio (Id/Ig) of the maximum peak intensity Id around 1,330 $cm^{-1}$ to the maximum peak intensity Ig around 1,580 $cm^{-1}$ in laser Raman spectrophotometry measurement is 0.1 to 0.5.

4. The graphite carbon material for a lithium-ion secondary battery negative electrode according to any one of claims 1 to 3, wherein the specific surface area determined by nitrogen adsorption measurement at 77K is 0.7 $m^2/g$ to 8 $m^2/g$.

5. The graphite carbon material for a lithium-ion secondary battery negative electrode according to any one of claims 1 to 4, wherein the crystallite size La (110) determined by X-ray diffraction is 50 nm to 450 nm.

6. The graphite carbon material for a lithium-ion secondary battery negative electrode according to any one of claims 1 to 5, wherein, in linseed oil absorption measurement, the oil absorption per 100 g of a graphite material is 30 mL to 75 mL.

7. A negative electrode material for a lithium-ion secondary battery, comprising the graphite carbon material for a lithium-ion secondary battery according to any one of claims 1 to 6.

8. A negative electrode for a lithium-ion secondary battery, comprising a graphite carbon material layer containing the graphite carbon material for a lithium-ion secondary battery according to any one of claims 1 to 6, and a current collector.

9. A lithium-ion secondary battery, comprising the negative electrode for a lithium-ion secondary battery according to claim 8, a positive electrode, and an electrolytic solution.

## INTERNATIONAL SEARCH REPORT

International application No.
**PCT/JP2023/038224**

**A. CLASSIFICATION OF SUBJECT MATTER**

***H01M 4/587***(2010.01)i; ***H01M 10/052***(2010.01)i; ***H01M 10/0566***(2010.01)i
FI: H01M4/587; H01M10/0566; H01M10/052

According to International Patent Classification (IPC) or to both national classification and IPC

**B. FIELDS SEARCHED**

Minimum documentation searched (classification system followed by classification symbols)

H01M4/587; H01M10/052; H01M10/0566

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2021-68491 A (SHOWA DENKO K.K.) 30 April 2021 (2021-04-30) claims 1-13, paragraph [0018], examples 1-8 | 1-9 |
| Y | WO 2022/162950 A1 (SHOWA DENKO MATERIALS CO., LTD.) 04 August 2022 (2022-08-04) claims 1-3, paragraphs [0021]-[0023] | 1-9 |
| Y | JP 2011-238622 A (MITSUBISHI CHEMICAL CORPORATION) 24 November 2011 (2011-11-24) claims 1-7, paragraphs [0041]-[0042], example 1 | 1-9 |
| Y | JP 2011-82054 A (OSAKA GAS CHEMICALS CO., LTD.) 21 April 2011 (2011-04-21) paragraph [0043] | 5 |
| Y | JP 2020-177932 A (HITACHI CHEMICAL COMPANY, LTD.) 29 October 2020 (2020-10-29) claims 1-6, paragraphs [0035]-[0041] | 6 |
| A | JP 2012-516826 A (TIMCAL S.A) 26 July 2012 (2012-07-26) | 1-9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 December 2023** | **26 December 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | Telephone No. |

Form PCT/ISA/210 (second sheet) (January 2015)

**INTERNATIONAL SEARCH REPORT**

International application No.
**PCT/JP2023/038224**

**C. DOCUMENTS CONSIDERED TO BE RELEVANT**

| Category* | Citation of document, with indication, where appropriate, of the relevant passages | Relevant to claim No. |
|---|---|---|
| A | JP 2021-529144 A (CHINA ENERGY INVESTMENT CORPORATION LIMITED) 28 October 2021 (2021-10-28) | 1-9 |

Form PCT/ISA/210 (second sheet) (January 2015)

**INTERNATIONAL SEARCH REPORT**
**Information on patent family members**

International application No.
**PCT/JP2023/038224**

| Patent document cited in search report | Publication date (day/month/year) | Patent family member(s) | Publication date (day/month/year) |
|---|---|---|---|
| JP 2021-68491 A | 30 April 2021 | WO 2019/151201 A1 | |
| | | TW 201940424 A | |
| WO 2022/162950 A1 | 04 August 2022 | TW 202231579 A | |
| JP 2011-238622 A | 24 November 2011 | US 2008/0199777 A1 claims 1-7, paragraphs [0074]-[0075], example 1 | |
| | | WO 2006/025376 A1 | |
| | | EP 1798790 A1 | |
| | | KR 10-2007-0072512 A | |
| | | CN 101053098 A | |
| JP 2011-82054 A | 21 April 2011 | (Family: none) | |
| JP 2020-177932 A | 29 October 2020 | US 2021/0135220 A1 claims 1-6, paragraphs [0073]-[0080] | |
| | | WO 2018/207333 A1 | |
| | | TW 201902013 A | |
| | | CN 110612626 A | |
| | | KR 10-2019-0141172 A | |
| JP 2012-516826 A | 26 July 2012 | US 2012/0077035 A1 | |
| | | KR 10-2011-0118153 A | |
| | | CN 102300807 A | |
| JP 2021-529144 A | 28 October 2021 | US 2021/0214225 A1 | |
| | | WO 2019/218504 A1 | |
| | | CN 108565438 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018006270 A
- JP 3285520 B
- JP 3325021 B